# EUROPEAN PATENT APPLICATION

(11) **EP 1 965 303 A1**
(43) Date of publication of application: **03.09.2008**
(21) Application number: 05820296.1
(22) Date of filing: 20.12.2005
(51) Int. Cl.: G06F 9/50

(54) **INFORMATION PROCESSING APPARATUS, COMPUTER, RESOURCE ALLOCATION METHOD AND RESOURCE ALLOCATION PROGRAM**

(71) Applicant: FUJITSU LIMITED, Kawasaki-shi, Kanagawa 211-8588 (JP)
(72) Inventor: TAGASHIRA, Kenji, Kawasaki-shi, Kanagawa 2118588 (JP)
(74) Representative: Delumeau, François Guy
(86) International application number: PCT/JP2005/023308
(87) International publication number: WO 2007/072544

(57) **Abstract**

It is an object of the present invention to provide a new resource allocation technique that allows for each partition to surely and automatically, without using manpower, use a proper amount of resources in accordance with the load when a structure is employed in which the inside of a computer is divided into a plurality of partitions and each partition performs data processing using the allocated resources. Storage unit for storing schedule information describing what amount of resources is allocated to a time range of which period or what time is prepared for each partition. In consideration of the fact that the usage of resources can be often figured out in advance, the present invention obtains an amount of resources stored in association with the time range to which the current time belongs from the storage unit, and controls such that each partition uses the obtained amount of resources to perform data processing.

## Description

### Technical Field

The present invention relates to an information processing apparatus that performs information processing, a computer in which the inside of the computer is divided into a plurality of partitions, each partition performing data processing using allocated resources, a resource allocation method performed by the information processing apparatus or the computer, and a resource allocation program used to realize the resource allocation method.

### Background Art

A server device is being used that can operate a plurality of OSs (operating system) on one server device.

Such a server device includes a plurality of CPUs, for example, an OS1 uses 10 CPUs to perform processing as a mail server, an OS2 uses 5 CPUs to perform processing as a business server, and an OS3 uses 3 CPUs to perform processing as a batch server. In such a way, the inside of the server device is divided into a plurality of partitions, and each partition performs data processing using resources such as allocated CPUs.

Conventionally, in such a server device, an administrator always monitors the usage of resources of the server device, and the distribution of resources is changed manually in accordance with the use status.

Furthermore, a method has also been used in which a certain amount of resources is pooled without allocating to any operations, and in an emergency, the pooled resources are allocated to operations in need of the resources. In this case too, the resources are allocated manually.

However, in operations such as net business, the load may increase rapidly. In such a case, there is a problem that when the distribution of resources is changed manually, a considerable amount of load is imposed on the administrator who changes the distribution.

Under the circumstances, recently, explaining with an example of using CPUs as resources, a technology has come to be used in which the usage ratio of the CPUs are monitored. According to the technology, when the monitored usage ratio of CPUs has exceeded a certain threshold, new CPUs are automatically incorporated by issuing a command for incorporating new CPUs when the usage ratio of CPUs becomes large (for example, refer to Patent Document 1).

By the way, as a background art of the present invention, an invention is described in Patent Document 2 stated below which, in a server system comprising a computer for receiving services and a plurality of servers, prevents the deterioration of service quality by changing the services provided by each server in accordance with the time frames.

Furthermore, as a background art of the present invention, an invention is described in Patent Document 3 stated below, describing a method for realizing clustering services of performing distributed processing by connecting a plurality of nodes in a network to make node groups called clusters and by dividing and allocating the processes to each node. Virtual servers for hosting services and virtual servers for clustering services are arranged on each of a plurality of physical servers, the virtual servers for clustering services are connected through a network to make clusters, and a CPU time scheduling function is used to allocate only the excess time of the CPUs to the virtual servers for clustering services, thereby enabling to realize the clustering services without lowering the performance of the hosting services.

Furthermore, as a background art of the present invention, an invention is described in Patent Document 4 stated below which, for a plurality of transaction processing messages inputted from a plurality of terminals, calculates predicted values of CPU used hours required for each execution based on the operation statistical information, and distributes the transaction processing messages to a plurality of servers based on the calculated predicted values and the current CPU usage ratio of the plurality of servers, thereby realizing leveling of the CPU use efficiency of each server.

Furthermore, as a background art of the present invention, an invention is described in Patent Document 5 stated below which realizes the optimization of the resource allocation. A resource management server collects the use status of resources of virtual computers, predicts the use status of resources based on the use status, calculates the correlation in relation to the use status of resources of each virtual computer from the past performance history of the virtual computers, and calculates the amount of resource allocation of each virtual computer based on the predicted values and the correlation coefficients.
(Patent Document 1: Japanese Patent Laid-Open No. 2003-150571)
(Patent Document 2: Japanese Patent Laid-Open No. 2002-150000)
(Patent Document 3: Japanese Patent Laid-Open No. 2002-318862)
(Patent Document 4: Japanese Patent Laid-Open No. 2003-296289)
(Patent Document 5: Japanese Patent Laid-Open No. 2004-199561)

### Disclosure of the Invention

### Problems to be Solved by the Invention

However, according to the prior art which monitors the use status of resources and manually changes the distribution of resources such as CPUs in accordance with the use status, there is a problem that the administrator always needs to monitor the use status of resources in addition to a problem that the resources must be distributed manually.

The utilization of a server device by a user often increases or decreases during a specific period or a specific time frame, and in such a case, the use status of resources can be figured out in advance. However, even in such a case, the manual distribution of resources is extremely inefficient.

Furthermore, according to the prior art which monitors the usage ratio of CPUs and automatically incorporates new CPUs when the monitored usage ratio of CPUs has exceeded a certain threshold, resources are allocated to a certain operation when the load of the operation has become high. Thus, there is a problem that even if the loads of other operations have become high, resources may not be able to be allocated to those operations.

The present invention has been made in view of the foregoing, and it is an object of the present invention to provide a new resource allocation technique that allows for processing functions of an information processing apparatus to surely use a proper amount of resources in accordance with the loads of the processing functions.

It is another object of the present invention to provide a new resource allocation technique that allows for each partition to surely and automatically, without using manpower, use a proper amount of resources in accordance with the load by scheduling the amount of resource allocation in advance considering the fact that the usage of resources can be often figured out in advance when a structure is employed in which the inside of a computer is divided into a plurality of partitions and each partition uses the allocated resources to perform data processing.

### Means for Solving the Problems

### [1] Structure of information processing apparatus of the present invention

### [1-1] First structure

In order to realize the above described objects, an information processing apparatus of the present invention comprises (1) a processing unit that performs information processing, (2) a timing unit for timing, (3) a storage unit for storing information indicating an amount of resources that should be allocated to a processing function in accordance with the time, and (4) a control unit for determining, in accordance with the timing result of the timing unit, an amount of resources that should be allocated at the time by referring to the storage unit and allocating the determined amount of resources to the corresponding processing function.

### [1-2] Second structure

Furthermore, in order to realize the above described objects, an information processing apparatus of the present invention comprises (1) a plurality of processing units, each performing a different processing function, (2) a storage unit for storing an amount of resources that should be allocated to each of the processing units in association with the time, and (3) a control unit for allocating an amount of resources that should be allocated to a processing unit in the current time by referring to the storage unit.

When this structure is employed, the storage unit may store the amount of resources that should be allocated to each processing unit for each time frame.

Furthermore, the information processing apparatus of the present invention may comprise a first device at least having the plurality of processing units and one or a plurality of terminal devices connected to the first device.

### [2] Structure of resource allocation method of the present invention

In order to realize the above described objects and to allocate resource required for processing to a processing unit that performs information processing, a resource allocation method of the present invention comprises (1) referring to schedule information indicating an amount of resources that should be allocated to the processing unit, (2) determining an amount of resources that should be allocated to the processing unit at the current time based on the schedule information, and (3) allocating the determined amount of resources to the processing unit.

By the resource allocation method of the present invention operating in the information processing apparatus of the present invention employing the above described structure, one or a plurality of processing functions provided by the information processing apparatus of the present invention can surely use proper amounts of resources in accordance with the loads.

### [3] Structure of computer of the present invention

In order to realize the above described objects, a computer of the present invention, in which the inside of the computer is divided into a plurality of partitions and each partition performs data processing using the allocated resources comprises (1) a storage unit for storing schedule information describing what amount of resources is allocated to each partition in a time range of which period or what time, (2) an obtaining unit for obtaining from the storage unit an amount of resources stored in association with the time range to which the current time belongs, and (3) a control unit for controlling such that each partition uses an amount of resources obtained by the obtaining unit to perform data processing.

When this structure is employed, the computer may comprise a determining unit for determining whether the time range to which the current time belongs has been changed from the one determined last time. When the computer comprises the determining unit, the obtaining unit obtains an amount of resources from the storage unit when the determining unit determines that the time range has changed.

Each of the foregoing processing unit except the storage unit can be realized by computer programs. The computer programs are provided recorded in appropriate computer-readable recording media or provided through a network, and are installed when implementing the present invention and operated on control means such as CPU to realize the present invention.

In the computer of the present invention configured this way, once the computer obtains the amount of resources stored in association with the time range to which the current time belongs from the storage unit, the computer controls such that each partition uses the obtained amount of resources to perform data processing.

More specifically, for a partition using an amount of resources fewer than the amount of resources obtained from the storage unit, the computer controls to newly allocate resources equivalent to a difference between the amount of resources used by the partition and the amount of resources obtained from the storage unit, and for a partition using an amount of resources greater than the amount of resources obtained by the obtaining unit, the computer controls to cancel the allocation of resources equivalent to a difference between the amount of resources used by the partition and the amount of resources obtained from the storage unit.

When the computer cancels the allocation, if the resources to be cancelled are being used, the computer controls to cancel the allocation of resources after the use is finished.

The computer of the present invention in which the inside of the computer is divided into a plurality of partitions and each partition performs data processing using the allocated resources schedules the amount of resource allocation in advance considering the fact that the usage of resources can be often figured out in advance and controls to allocate resource to each partition according to the scheduling. Therefore, the computer allows for each partition to surely and automatically, without using manpower, use a proper amount of resources in accordance with the load.

### Advantages of the Invention

According to the present invention, one or more processing functions provided by the information processing apparatus can surely use proper amounts of resources in accordance with the loads.

Hence, according to the present invention, in the information processing apparatus that processes information using one or a plurality of processing functions, the information processing can be performed efficiently.

Furthermore, according to the present invention, when a structure is employed in which the inside of the computer is divided into a plurality of partitions and each partition performs data processing using the allocated resources, each partition can surely and automatically, without using manpower, use a proper amount of resources in accordance with the load.

Hence, according to the present invention, when a structure is employed in which the inside of the computer is divided into a plurality of partitions and each partition performs data processing using the allocated resources, the data processing can be performed efficiently.

### Brief Description of the Drawings

Fig. 1 is an example of an embodiment of a server device of the present invention.
Fig. 2 is an example of schedule information managed by a schedule information table.
Fig. 3 is an explanatory view of the schedule information managed by the schedule information table.
Fig. 4 is an example of a process flow performed by a schedule information creation unit.
Fig. 5 is an example of a process flow performed by the schedule information creation unit.
Fig. 6 is an example of a process flow performed by setting reflection units.
Fig. 7 is an example of a process flow performed by the setting reflection units.
Fig. 8 is an explanatory view of a schedule information creation screen.
Fig. 9 is an explanatory view of an OS selection screen.
Fig. 10 is an explanatory view of a number of CPUs setup screen.
Fig. 11 is an explanatory view of a number of CPUs setup completion screen.
Fig. 12 is another example of a process flow performed by the setting reflection units.
Fig. 13 is another example of a process flow performed by the setting reflection units.
Fig. 14 is another example of an embodiment of the server device of the present invention.
Fig. 15 is another example of a process flow performed by the setting reflection units.
Fig. 16 is another example of a process flow performed by the setting reflection units.

### Description of Symbols

- 1: server device
- 2: server management device
- 3: network
- 4: network
- 5: user terminal
- 10: partition
- 11: system board
- 12: service processor
- 20: schedule information creation unit
- 21: schedule information transmission unit
- 100: operating system
- 101: application program
- 102: setting reflection unit
- 103: time frame definition information storage unit
- 104: previous time frame information storage unit
- 120: schedule information table
- 121: schedule information registration unit

### Best Mode for Carrying Out the Invention

Hereinafter, the present invention will be described in detail in accordance with the embodiments.

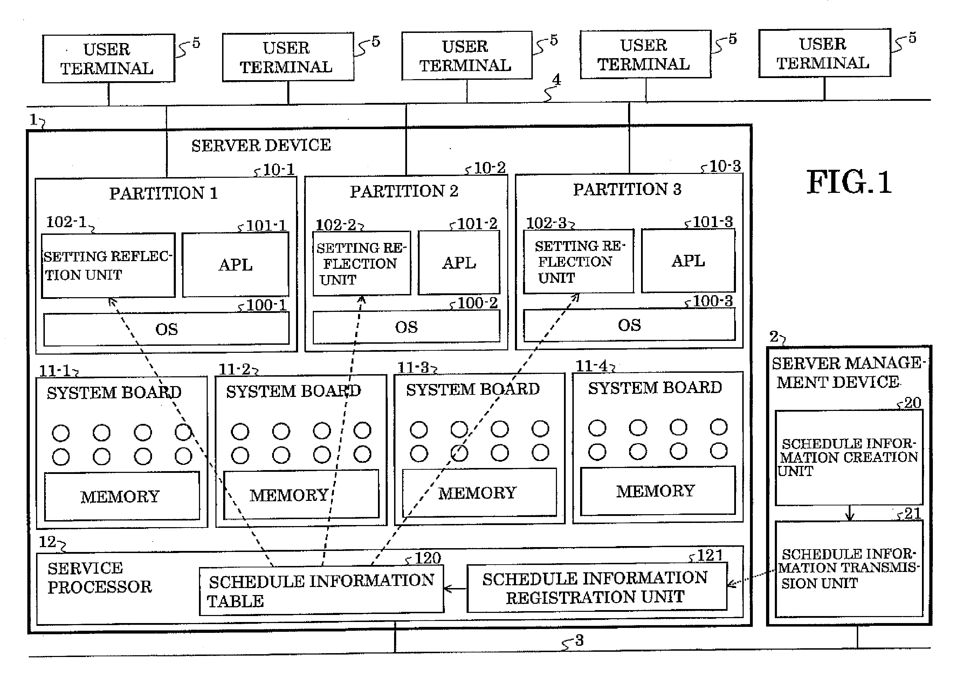

Fig. 1 illustrates an example of an embodiment of a server device 1 of the present invention.

As shown in the Fig. 1, the server device 1 of the present embodiment is connected to a server management device 2 that manages the device itself through a network 3, and performs processing for providing a plurality of server functions, such as, for example, a function as a mail server, a function as a business server, and a function as a batch server, to a user terminal 5 connected through a network 4.

In order to accomplish providing the server functions, the inside of the device of the server device 1 of the present embodiment is divided into a plurality of partitions 10-i (i=1 to 3) in accordance with operating systems 100-i (i=1 to 3) and application programs 101-i (i=1 to 3) provided to realize each server function. The partitions 10-i use CPUs allocated respectively as hardware resources and perform predetermined server functions in accordance with the operating systems 100-1 (i=1 to 3) and application programs 101-i (i=1 to 3) deployed in their own partitions 10-i.

Here, reference numeral 11-i (i=1 to 4) shown in Fig. 1 denotes system boards that are included in the server device 1 of the embodiment and that are installed with CPUs (shown with circles in Fig. 1) allocated to each operating system 100-i and memories. Reference numeral 12 denotes a service processor included in the server device 1 of the embodiment that manages the server device 1 of the embodiment in cooperation with the server management device 2.

When configured in such a manner, in order to realize the present embodiment with the server device 1 of the present embodiment, the service processor 12 includes a schedule information table 120 for managing schedule information in relation to the number of CPUs allocated to each operating system 100-i and schedule information registration unit 121 that receives schedule information transmitted from the server management device 2 and registers the schedule information to the schedule information table 120. Meanwhile, the partitions 10-i includes setting reflection units 102-i (i=1 to 3) that set the numbers of CPUs used by their own partitions 10-i in accordance with the schedule information managed by the schedule information table 120.

In order to manage the server device 1 of the present embodiment, the server management device 2 includes a schedule information creation unit 20 that creates schedule information to be registered to the schedule information table 120 and a schedule information transmission unit 21 that transmits the schedule information created by the schedule information creation unit 20 to the service processor 12 and registers the schedule information to the schedule information table 120.

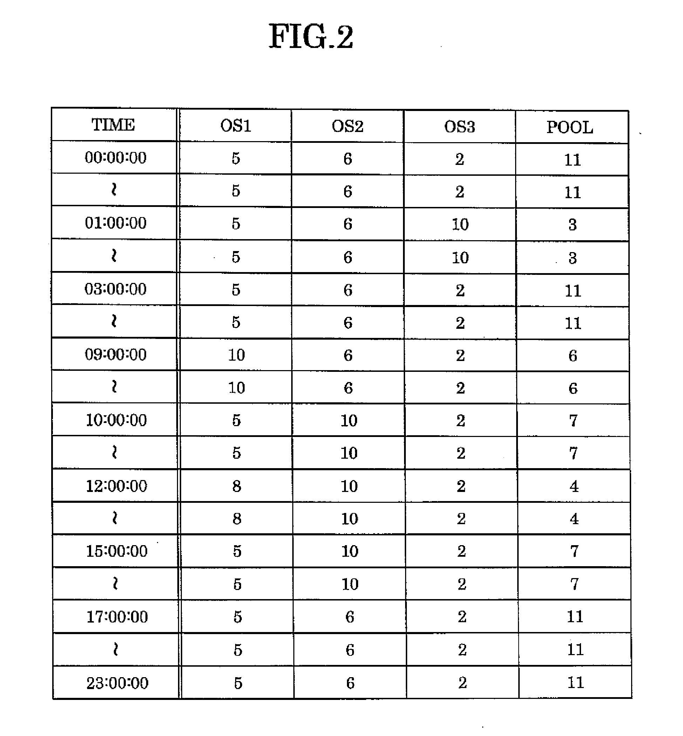

Fig. 2 illustrates an example of the schedule information managed by the schedule information table 120.

As shown in Fig. 2, the schedule information table 120 stores information for managing, in association with set time frames and in the time frames, the number of CPUs allocated to each operating system 100-i and the number of CPUs that is not allocated to each operating system 100-i but pooled.

In the example of the schedule information shown in Fig. 2, the server device 1 of the embodiment includes three partitions. The partitions includes a mail server (OS1), a business server (OS2), and a batch server (OS3). When the server device 1 has 24 CPUs overall, it is assumed that the CPUs are allocated as follows.

| | | | |
|---|---|---|---|
| mail server (OS1) | 9AM to 10AM: | high load | 10 CPU |
| | 12PM to 3PM: | high load | 8 CPU |
| | the rest: | low load | 5 CPU |
| business server (OS2) | 10AM to 5PM: | high load | 10 CPU |
| | the rest: | low load | 6 CPU |
| batch server (OS3) | 1AM to 3AM: | high load | 10 CPU |
| | the rest: | low load | 2 CPU |

In other words, in a time frame in which a high load is expected for a certain function, the number of CPUs is scheduled to reduce the load of the operating system 100-i corresponding to the function with the high load by allocating more CPUs to the function. On the other hand, in a time frame in which a low load is expected for a certain function, the number of CPUs is scheduled such that more CPUs can be allocated to another operating system 100-i with high load by reducing the allocated number of CPUs to the function.

Whether an operating system is in a high load or in a low load in a certain time frame can be determined using the usage ratio of the CPUs in the time frame or the like.

In addition, in the example of the schedule information shown in Fig. 2, although the time frames are set with one hour as a unit, the time frames can be set with an arbitrary time as a unit such as 40 minutes. Furthermore, in the example of the schedule information shown in Fig. 2, although it is assumed that the time frames common for three operating systems 100-i is set, separate time frames and separate time segmentations can be set for each function/operating system 100-i.

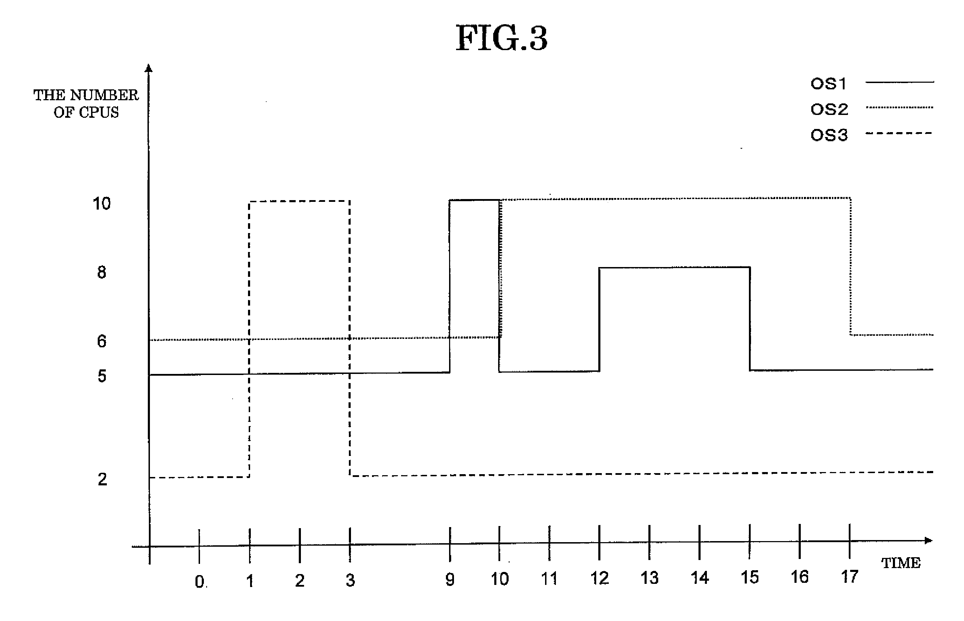

Fig. 3 is a diagram in relation to the schedule shown in Fig. 2 in which the time is illustrated on the horizontal axis while the numbers of CPUs to be allocated are illustrated on the vertical axis. By illustrating in a form as shown in Fig. 3, the numbers of CPUs that are allocated or that should be allocated to each time frame can be easily recognized.

In this way, the schedule information table 120 manages the schedule information describing how many CPUs are allocated to each operating system 100-i in which of the time frames.

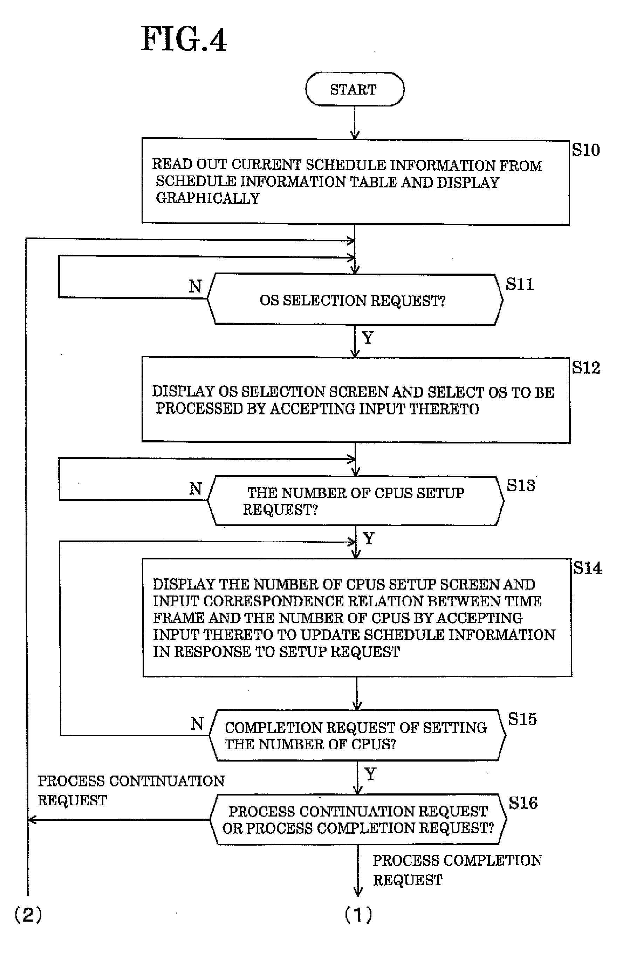

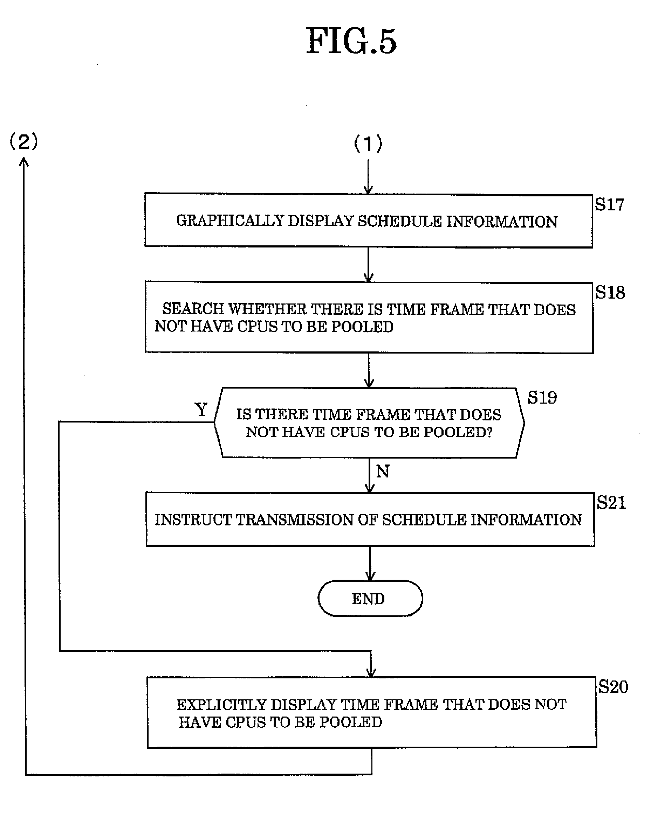

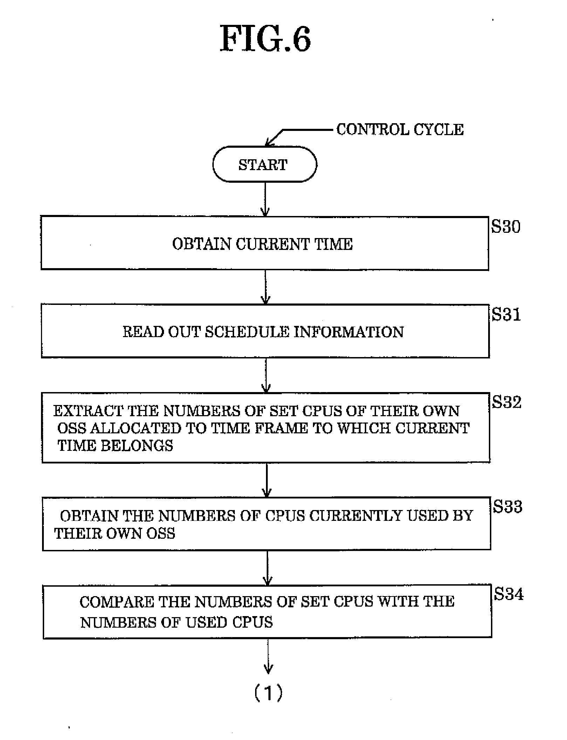

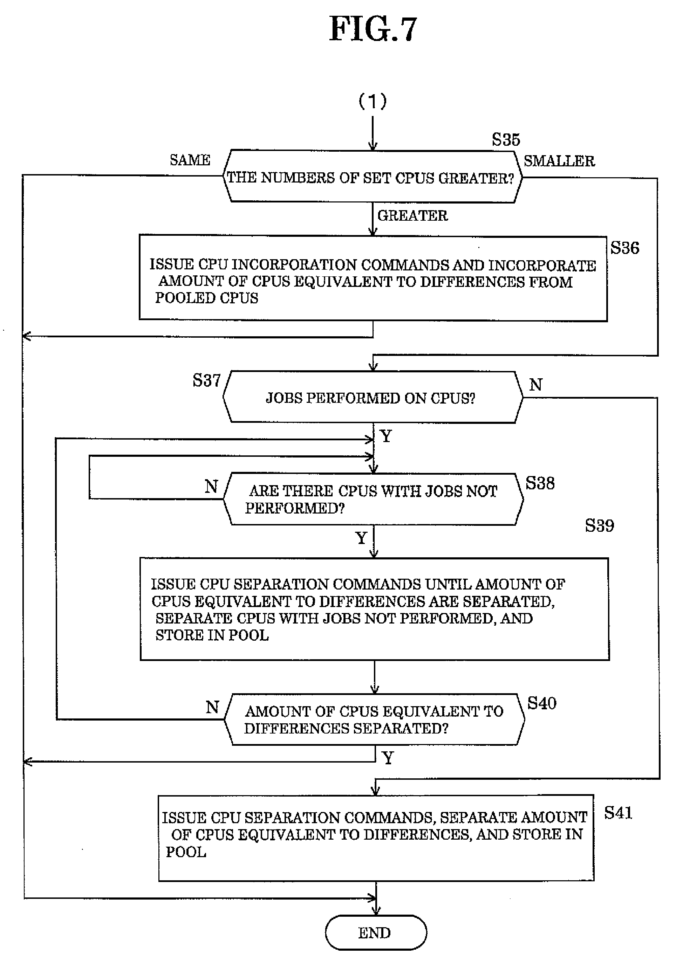

Fig. 4 and Fig. 5 illustrate an example of a process flow performed by the schedule information creation unit 20 included in the server management device 2, and Fig. 6 and Fig. 7 illustrate an example of a process flow performed by the setting reflection units 102-i included in the server device 1.

Next, in accordance with the process flows, the processes performed by the server device 1 of the embodiment shown in Fig. 1 will be described in detail.

First, in accordance with the process flows of Fig. 4 and Fig. 5, the processes performed by the schedule information creation unit 20 included in the server management device 2 will be described.

When there is a creation request of the schedule information to be registered in the schedule information table 120 from the administrator operating the server management device 2, the schedule information creation unit 20 included in the server management device 2 first reads out currently managed schedule information from the schedule information table 120 in step S10. The read out schedule information is displayed, as necessary, in a form such as a graphic representation on a display that is not shown in Fig. 1.

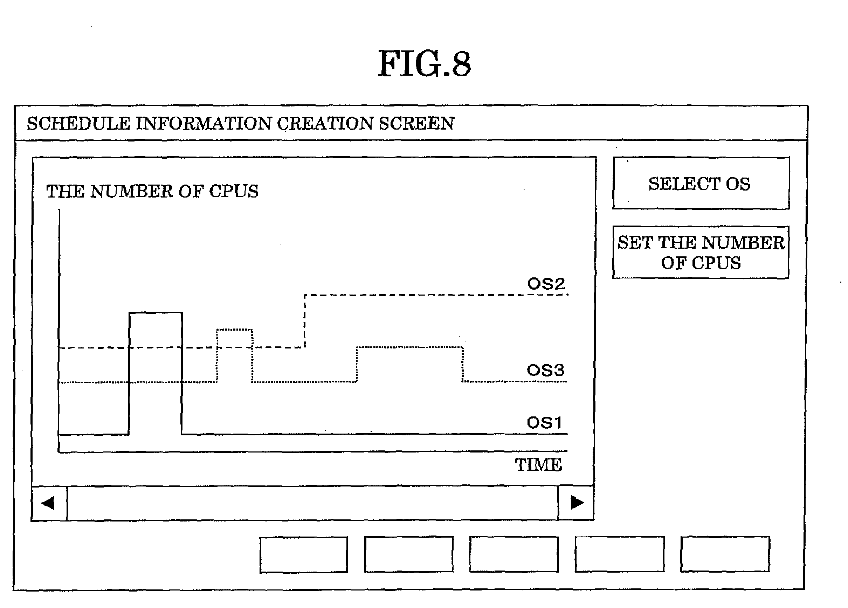

Fig. 8 is a diagram showing an example of a schedule information creation screen shown on a display. More specifically, the schedule information creation unit 20 displays on a display a schedule information creation screen such as the one shown in Fig. 8 and displays the schedule information read out from the schedule information table 120 in a graphical form on the schedule information creation screen. The graph shown on the schedule information creation screen of Fig. 8 is the one that displays the schedule information, which is created using the schedule information creation screen, in association with the time and the number of CPUs, and the graph is equivalent to the graph illustrated in Fig. 2.

The schedule information creation screen shown in Fig. 8 has an OS selection button operated upon a selection request of the operating systems 100-i and a number of CPUs setup button operated upon a setup request of the number of CPUs allocated to the operating systems 100-i.

Furthermore, in the schedule information creation screen shown in Fig. 8, although an example is shown in which the number of CPUs that are not allocated to the operating systems 100-i (the number of pooled CPUs) is not graphically displayed, it is possible to graphically display the number of CPUs.

Subsequently, in step S11, whether the OS selection button displayed on the schedule information creation screen has been operated is detected. If it is determined that the OS selection button has been operated, a selection request of the operating systems 100-i is issued, and therefore, the schedule information creation unit 20 waits for the selection request of the operating systems 100-i to be issued. Once the selection request of the operating systems 100-i is issued, the process proceeds to step S12. The schedule information creation unit 20 displays the OS selection screen used for selecting an operating system 100-i, and selects an operating system 100-i to be processed by accepting an input to the OS selection screen.

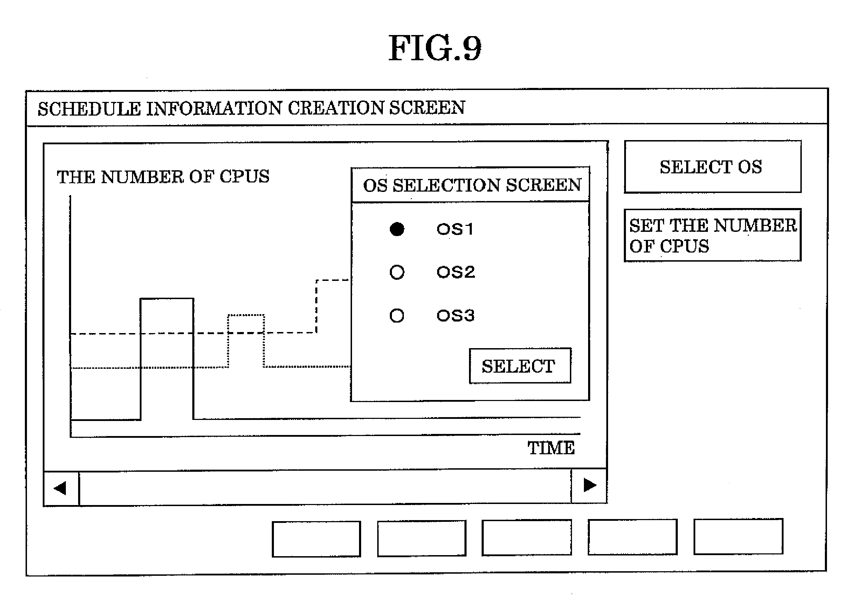

In other words, as shown in Fig. 9, the schedule information creation unit 20 displays the OS selection screen used for selecting an operating system 100-i, and selects an operating system 100-i to be processed by accepting an input thereto. The OSs to be selected are listed on the OS selection screen, and therefore, an operator instructs an OS to be selected on the screen and operates the selection button.

Subsequently, after the OS is selected, in step S13, the schedule information creation unit 20 detects whether the number of CPUs setup button displayed on the schedule information creation screen is operated. When the number of CPUs setup button is operated, a setup request of the number of CPUs is issued. The schedule information creation unit 20 waits for the setup request of the number of CPUs to the operating system 100-i to be processed to be issued. When the setup request of the number of CPUs is issued, the process proceeds to step S14 and the schedule information creation unit 20 displays the number of CPUs setup screen used for setting the number of CPUs. Then, by accepting an input from the number of CPUs setup screen, the schedule information creation unit 20 inputs the correspondence relation between the time frames and the number of CPUs in relation to the operating system 100-i to be processed. When there is a setup request of the inputted correspondence relation, the schedule information creation unit 20 updates the schedule information read out from the schedule information table 120 in response to the setup request.

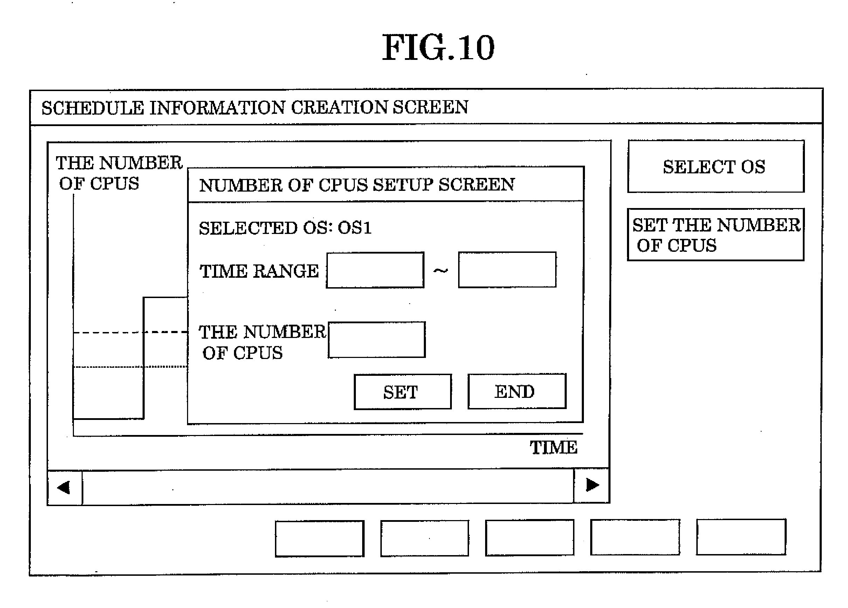

Fig. 10 is a diagram showing a display example of the number of CPUs setup screen. More specifically, as shown in Fig. 10, the schedule information creation unit 20 displays the number of CPUs setup screen used for setting the number of CPUs to the operating system 100-i to be processed and receives an input thereto. The number of CPUs setup screen has an entry field for setting the time frames and an entry field for inputting the number of CPUs to be set. The operator inputs from the entry fields the correspondence relation of the time frames and the number of CPUs in relation to the operating system 100-i to be processed and operates the setup button displayed on the number of CPUs setup screen. The schedule information creation unit 20 regards the operation of the setup button as a setup request of the correspondence relation inputted by the operator and, in response to the setup request, updates the schedule information read out from the schedule information table 120 to the inputted information.

Subsequently, in step S15, the schedule information creation unit 20 determines whether the completion button displayed on the number of CPUs setup screen is operated. In other words, the schedule information creation unit 20 determines whether a number of CPUs setup completion request is issued. When the completion button is not operated, in other words, when the setup button included in the number of CPUs setup screen is operated, the process returns to the step S14 and the schedule information creation unit 20 continues updating the schedule information.

On the other hand, when the schedule information creation unit 20 detects, in the step S15, that the completion button included in the number of CPUs setup screen is operated and the number of CPUs setup completion request is issued, the process proceeds to step S16. In the step S16, the schedule information creation unit 20 accepts a process continuation request or displays the number of CPUs setup completion screen used for accepting a process completion request, and then determines whether there is a request for continuing the process or there is a request for completing the process by accepting an input thereto.

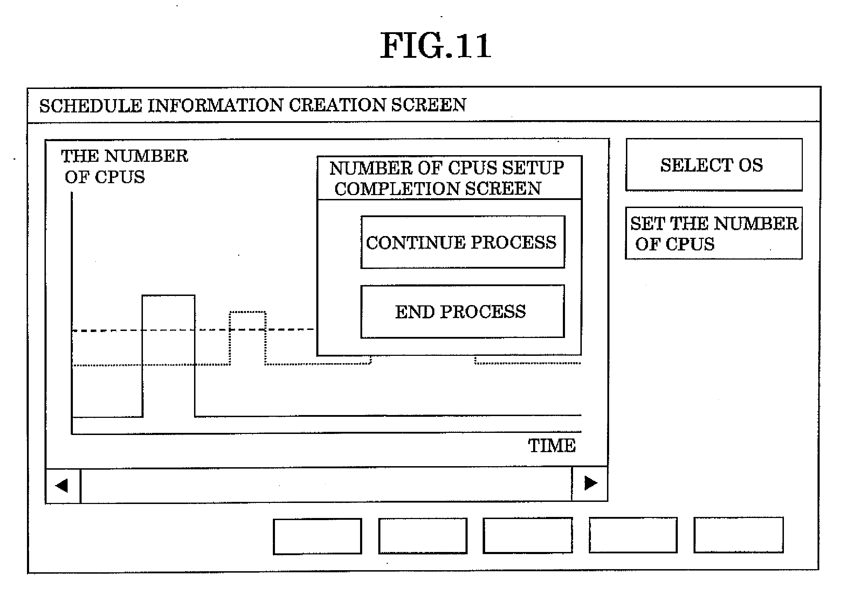

Fig. 11 is a diagram showing an example of the number of CPUs setup completion screen displayed on the screen. As shown in Fig. 11, the number of CPUs setup completion screen used for accepting the process continuation request or accepting the process completion request is displayed, and by accepting an input thereto, the schedule information creation unit 20 determines whether there is a request for continuing the process or there is a request for completing the process.

When the schedule information creation unit 20 determines that a request for continuing the process is issued in accordance with the determining process of the step S16, the schedule information creation unit 20 returns to step S11 and continues updating the schedule information.

On the other hand, when the schedule information creation unit 20 determines that a request for completing the process is issued in accordance with the determining process of the step S16, the process proceeds to step S17 and the schedule information creation unit 20 changes the schedule information used for graphically displaying on the schedule information creation screen to the information that has been updated in the process of the step S14, and then performs processing of graphically displaying the newly created schedule information.

Subsequently, in step S18, the schedule information creation unit 20 finds the sum of the numbers of CPUs allocated to each operating system 100-i for each time frame and determines whether it is smaller than the sum of the number of CPUs installed on the system boards 11. The schedule information creation unit 20 searches from the determination whether there is a time frame that does not have CPUs to be pooled.

Subsequently, in step S19, the schedule information creation unit 20 determines whether a time frame that does not have CPUs to be pooled exists is detected in accordance with the process of the step S18. When the schedule information creation unit 20 determines that there is a time frame that does not have CPUs to be pooled, the process proceeds to step S20 and the schedule information creation unit 20 explicitly displays the time frame that does not have CPUs to be pooled in relation to the schedule information graphically displayed on the schedule information creation screen, and then the process returns to the step S11. This instructs the administrator who creates the schedule information to reconfigure the number of CPUs so that there is no time frame that does not have CPUs to be pooled.

On the other hand, in step S19, when the schedule information creation unit 20 determines that there is no time frame that does not have CPUs to be pooled in accordance with the process in the step S18, the process proceeds to step S21, and the schedule information creation unit 20 instructs the schedule information transmission unit 21 to transmit the newly created schedule information and finishes the process.

Receiving the transmission instruction, the schedule information transmission unit 21 transmits the schedule information instructed for transmission to the service processor 12. Receiving the transmission of the schedule information, the schedule information registration unit 121 included in the service processor 12 receives the schedule information transmitted from the schedule information transmission unit 21 and registers the schedule information to the schedule information table 120.

In this way, the schedule information as shown in Fig. 2 is registered to the schedule information table 120.

Next, in accordance with process flows of Fig. 6 and Fig. 7, processes performed by the setting reflection units 102-i included in the server device 1 will be described.

Once activated by reaching a control cycle set at, for example, 5 minute cycle, the setting reflection units 102-i first refer to a clock (not shown) in step S30 to obtain the current time, and in the following step S31, read out the schedule information from the schedule information table 120.

Subsequently, in step S32, in accordance with the read out schedule information, the setting reflection units 102-i extract the numbers of set CPUs of their own operating systems 100-i (operating systems 100-i deployed in the partitions 10-i to which they belong) allocated to the time frame to which the current time belongs. In the following step S33, the setting reflection units 102-i obtain the numbers of CPUs that their own operating systems 100-i are currently using.

Subsequently, in step S34, the setting reflection units 102-i compare the extracted numbers of set CPUs with the obtained numbers of used CPUs. In the following step S35, based on the comparison result, the setting reflection units 102-i determine whether the numbers of set CPUs and the numbers of used CPUs are the same values, in other words, whether the numbers of set CPUs are greater than the numbers of used CPUs, or whether the numbers of set CPUs are smaller than the numbers of used CPUs.

In accordance with the determining process of the step S35, when a comparison result that the numbers of set CPUs and the numbers of used CPUs are the same values is obtained, the setting reflection units 102-i do no perform any processing and end the process.

On the other hand, in accordance with the determining process of step S35, when a comparison result that the numbers of set CPUs are greater than the numbers of used CPUs is obtained, the setting reflection units 102-i advance to step S36 and issue CPU incorporation commands (commands installed in the operating systems 100-i) to incorporate (allocate) the amount of CPUs equivalent to the differences between the numbers of set CPUs and the numbers of used CPUs from the pooled CPUs into their own operating systems 100-i, and end the process.

On the other hand, in accordance with the determining process of the step S35, when the numbers of set CPUs are smaller than the numbers of used CPUs, the setting reflection units 102-i advance to step S37 and determine whether jobs are performed on the CPUs allocated to their own operating systems 100-i.

In accordance with the determining process of the step S37, when the setting reflection units 102-i determine that the jobs are not performed on the CPUs, they advance to step S41 and issue CPU separation commands (commands installed on the operating systems 100-i) because the amount of CPUs equivalent to the differences between the numbers of used CPUs and the numbers of set CPUs can be separated. Thus, the setting reflection units 102-i separate the amount of CPUs equivalent to the differences between the numbers of used CPUs and the numbers of set CPUs from their own operating systems 100-i and stored in pools, and end the process.

On the other hand, in accordance with the determining process of the step S37, when the setting reflection units 102-i determine that the jobs are performed on the CPUs, the process proceeds to step S38 and the setting reflection units 102-i determine whether there are CPUs that have finished performing the jobs.

In accordance with the determining process of the step S38, when there are CPUs that have finished performing the jobs, the process proceeds to step S39 and the setting reflection units 102-i issue CPU separation commands until the amount of CPUs equivalent to the differences between the numbers of used CPUs and the numbers of set CPUs are separated, thereby separating the CPUs that are not performing the jobs from their own operating systems 100-i and storing the CPUs in the pool.

Then, in step S40, the setting reflection units 102-i determine whether the amount of CPUs equivalent to the differences between the numbers of used CPUs and the numbers of set CPUs are separated. When the amount of CPUs equivalent to the differences between the numbers of used CPUs and the numbers of set CPUs is not separated, the process returns to the step S38, and the setting reflection units 102-i wait for the generation of CPUs that finish performing the jobs. On the other hand, when the amount of CPUs equivalent to the differences between the numbers of used CPUs and the numbers of set CPUs are separated, the setting reflection units 102-i end the process.

In this way, in the present embodiment, when a plurality of operating systems 100-i operate in the server device 1 to provide a plurality of server functions, the allocation of the amount of CPUs used by each operating system 100-i is scheduled in advance, and in accordance with the scheduling, the allocation of CPUs to each operating system 100-i is controlled.

The temporal fluctuation of the load of each operating system 100-i can often be figured out in advance. Therefore, according to the structure of the present embodiment, each operating system 100-i can automatically, without using manpower, use the proper amount of CPUs in accordance with the load.

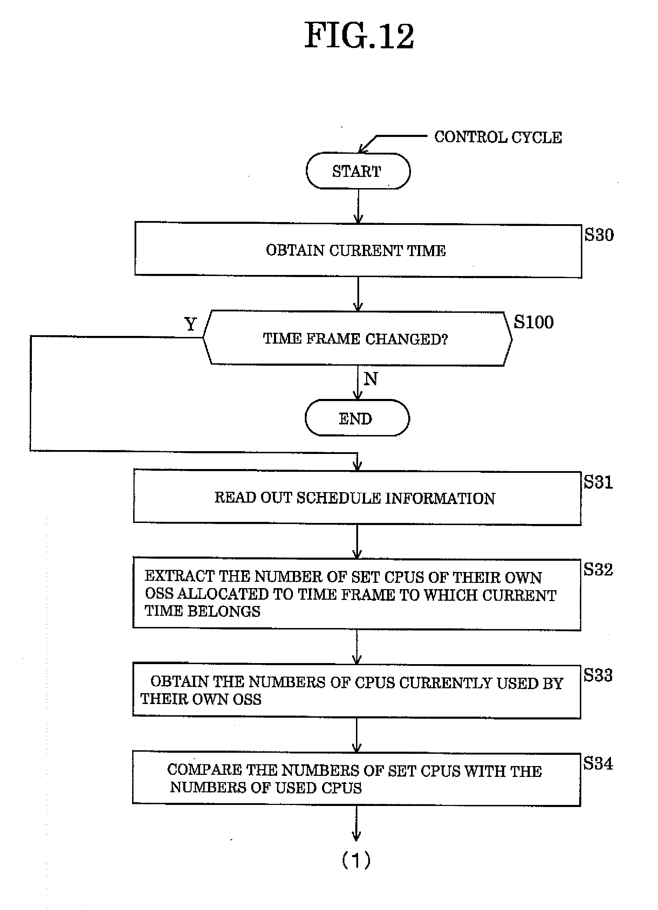

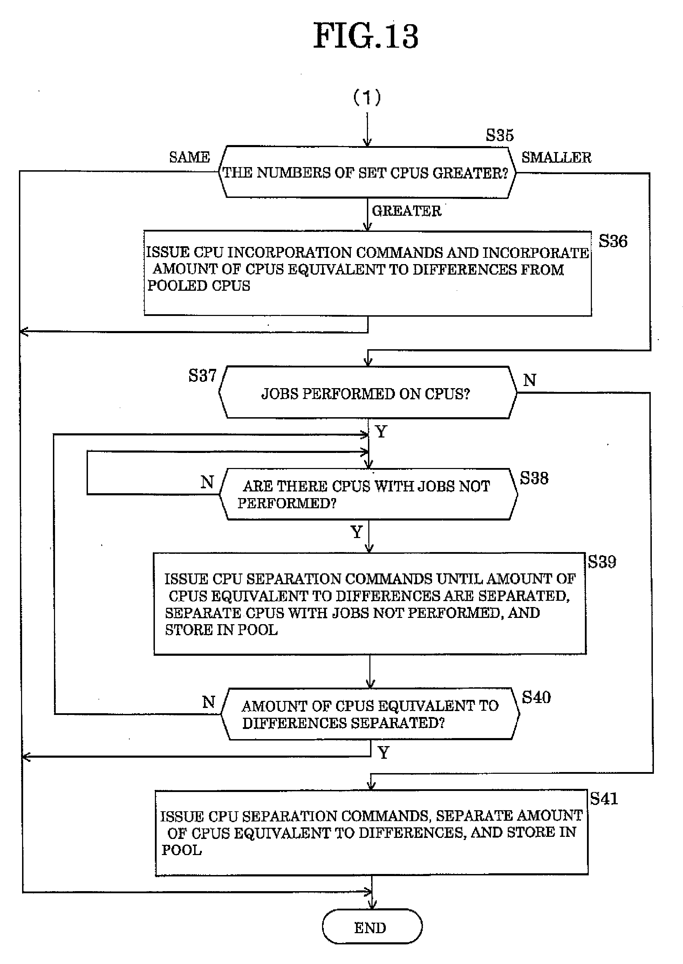

Fig. 12 and Fig. 13 illustrate another example of process flows performed by the setting reflection units 102-i. Steps of performing the same processes as in the process flows of Fig. 6 and Fig. 7 are described with the same step numbers herein.

When performing the process flows of Fig. 6 and Fig. 7, the setting reflection units 102-i obtain the current time in step S30. Then, the process immediately proceeds to step S31 and the setting reflection units 102-i read out the schedule information from the schedule information table 120.

Meanwhile, when performing the process flows of Fig. 12 and Fig. 13, the setting reflection units 102-i obtain the current time at step S30. Then, the setting reflection units 102-i determine, in the following step S100, whether the time frame has changed from the time frame processed in the previous control cycle. Then, the process proceeds to step S31 only when the time frame has changed, and the setting reflection units 102-i read out the schedule information from the schedule information table 120.

For example, when a protocol is established for setting the time frames every one hour, it is possible to determine whether the time frame has changed from the time frame processed in the previous control cycle just by looking at the current time.

The numbers of set CPUs have not changed when the time frame has not changed. Therefore, there is no need to proceed to processes subsequent to the step S31.

Thus, when performing the process flows of Fig. 12 and Fig. 13, when the setting reflection units 102-i obtain the current time in the step S30, the setting reflection units 102-i determine, in the following step S100, whether the time frame has changed from the time frame processed in the previous control cycle. When the setting reflection units 102-i determine that the time frame has not changed, the setting reflection units 102-i immediately end the process without proceeding to the processes subsequent to the step S31.

By performing the process flows of Fig. 12 and Fig. 13, the setting reflection units 102-i do not have to perform wasteful processes.

On the other hand, instead of establishing such a protocol for setting the time frames every one hour, when the administrator who creates the schedule information is permitted to freely set the time frames, whether the time frame has changed from the time frame processed in the previous control cycle cannot be determined just by looking at the current time.

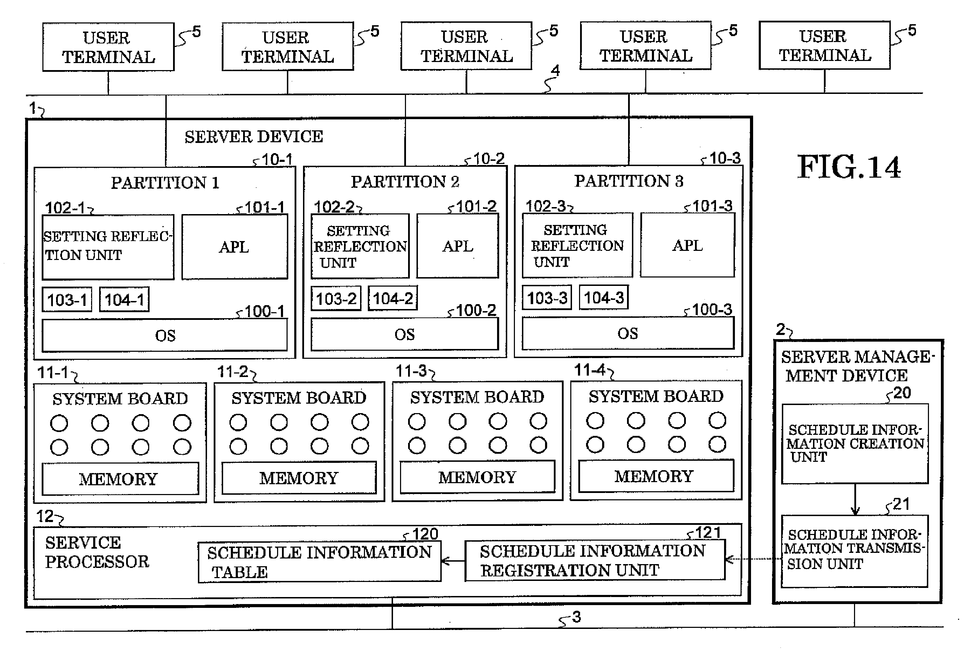

In such a case, as shown in Fig. 14, the partitions 10-i may includes time frame definition information storage units 103-i (i=1 to 3) that copy and store information in relation to the time frames defined by the schedule information managed by the schedule information table 120 and previous time frame information storage units 104-i (i=1 to 3) that store information in relation to the time frame processed in the previous control cycle.

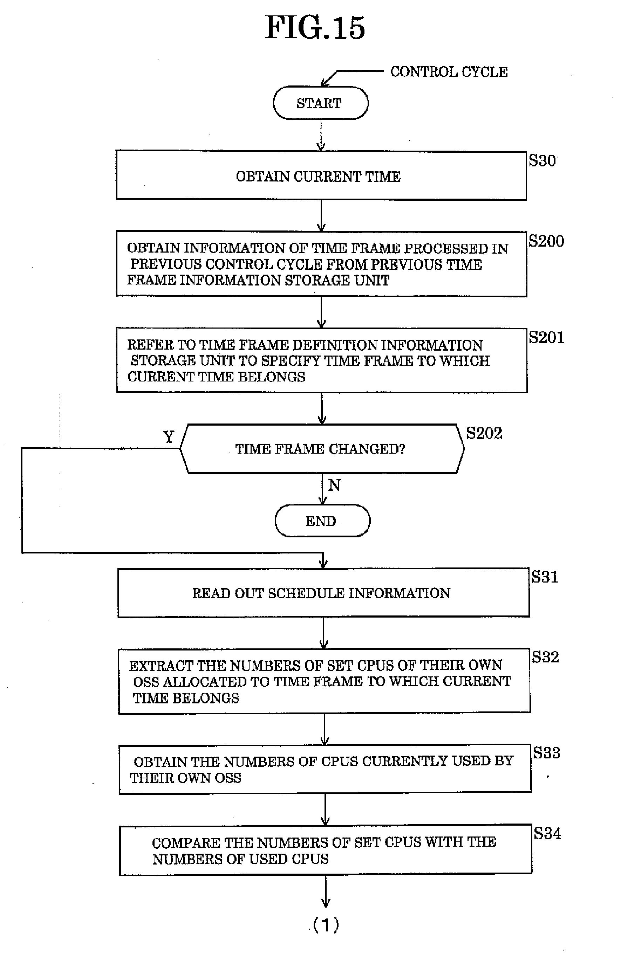

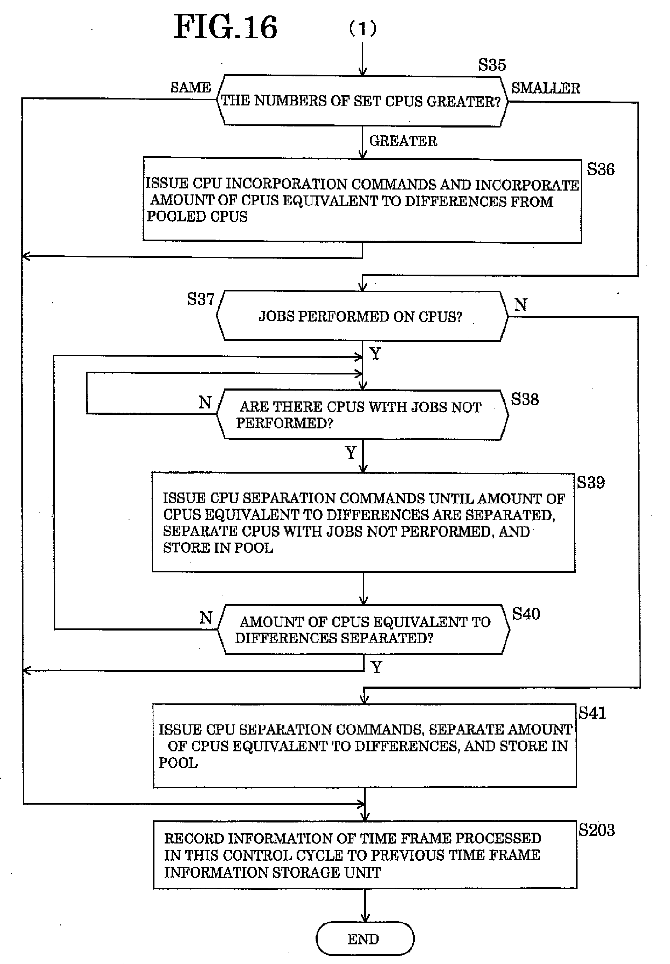

Then, the setting reflection units 102-i included in the server device 1 perform the process flows of Fig. 15 and Fig. 16. Steps of performing the same processes as in the process flows of Fig. 6 and Fig. 7 are described with the same step numbers herein.

More specifically, when permitting the administrator who creates the schedule information to freely set the time frames, as shown in the process flows of Fig. 15 and Fig. 16, the setting reflection units 102-i obtain the current time in the step S30, and subsequently, obtain the information of the time frame processed in the previous control cycle from the previous time frame information storage units 104-i in step S200. Subsequently, in step S201, by referring to the time frame definition information storage units 103-i, the setting reflection units 102-i specify the time frame to which the current time belongs.

Next, in step S202, based on the information of the time frame obtained in the step S200 and the information of the time frame specified in the step S201, the setting reflection units 102-i determine whether the time frame has changed from the time frame processed in the previous control cycle. Only when the time frame has changed, the process proceeds to step S31, and the setting reflection units 102-i read out the schedule information from the schedule information table 120.

Then, before ending the process, in step S203, the setting reflection units 102-i record the information of the time frame processed in this control cycle (information of the time frame specified in the step S201) in the previous time frame information storage units 104-i, and then the process ends.

In this way, when permitting the administrator who creates the schedule information to freely set the time frames, the setting reflection units 102-i perform the process flows of Fig. 15 and Fig. 16 to determine whether the time frame has changed from the time frame processed in the previous control cycle. When the time frame has not changed, the process immediately ends without proceeding to processes subsequent to the step S31.

By performing the process flows of Fig. 15 and Fig. 16, the setting reflection units 102-i do not have to perform wasteful processes.

Although described in accordance with the illustrated embodiments, the present invention is not limited to these. For example, the present invention may target an information processing apparatus employing a structure in which one or a plurality of processing functions are used to process information, and when realizing the allocation of resources to the processing functions by scheduling in a form described above, the present invention can be applied as it is.

Furthermore, although an application to a server device is described as a specific example in the embodiments described above, the present invention is not only applicable to a server device, but also applicable as it is to a general computer.

Furthermore, in the embodiments described above, although a form has been described in which the functions are divided into the server device and the server management device, the functions and the processes performed by these devices do not have to be divided essentially. All the processes described above may be contained in a single device. On the other hand, even if the functions are to be divided between a plurality of devices, the distribution of the functions can be arbitrarily set to a different form from the embodiments above.

### Industrial Applicability

The present invention is applicable to an information processing apparatus employing a structure in which information is processed using one or a plurality of processing functions, and allows the processing functions to surely use proper amounts of resources in accordance with the loads.

The present invention is applicable to a computer employing a structure in which the inside of the computer is divided into a plurality of partitions and each partition performs data processing using allocated resources, and allows each partition to surely and automatically, without using manpower, use a proper amount of resources in accordance with the load.

## Claims

1. An information processing apparatus, comprising:
a processing unit that performs information processing;
a timing unit for timing;
a storage unit for storing information indicating an amount of resources that should be allocated to a processing function in accordance with the time; and
a control unit for determining, in accordance with the timing result of the timing unit, an amount of resources that should be allocated at the time by referring to the storage unit and allocating the determined amount of resources to the corresponding processing function.

2. An information processing apparatus, comprising:
a plurality of processing units, each performing a different processing function;
a storage unit for storing an amount of resources that should be allocated to each of the processing units in association with the time; and
a control unit for allocating an amount of resources that should be allocated to a processing unit in the current time by referring to the storage unit.

3. The information processing apparatus according to claim 2, wherein the storage unit stores the amount of resources that should be allocated to each processing unit for each time frame.

4. The information processing apparatus according to claim 2, comprising:
a first device at least having the plurality of processing units; and
one or a plurality of terminal devices connected to the first device.

5. A resource allocation method for allocating resource required for processing to a processing unit that performs information processing, comprising:
referring to schedule information indicating an amount of resources that should be allocated to the processing unit;
determining an amount of resources that should be allocated to the processing unit at the current time based on the schedule information; and
allocating the determined amount of resources to the processing unit.

6. A computer in which the inside of the computer is divided into a plurality of partitions and each partition performs data processing using the allocated resources, comprising:
a storage unit for storing schedule information describing what amount of resources is allocated to each partition in a time range of which period or what time;
an obtaining unit for obtaining from the storage unit an amount of resources stored in association with the time range to which the current time belongs; and
a control unit for controlling such that each partition uses an amount of resources obtained by the obtaining unit to perform data processing.

7. The computer according to claim 6, wherein, for a partition using an amount of resources fewer than the amount of resources obtained by the obtaining unit, the control unit controls to newly allocate resources equivalent to a difference between the amount of resources used by the partition and the amount of resources obtained by the obtaining unit, and for a partition using an amount of resources greater than the amount of resources obtained by the obtaining unit, the control unit controls to cancel the allocation of resources equivalent to a difference between the amount of resources used by the partition and the amount of resources obtained by the obtaining unit.

8. The computer according to claim 7, wherein, when the control unit cancels the allocation, if the resources to be cancelled are being used, the control unit controls to cancel the allocation of resources after the use is finished.

9. The computer according to any one of claims 6 to 8, further comprising:
a determining unit for determining whether the time range to which the current time belongs has changed from the one determined the last time,
wherein the obtaining unit obtains the amounts of resources from the storage unit when the determining unit determines that the time range has changed.

10. A resource allocation method performed in a computer in which the inside of the computer is divided into a plurality of partitions and each partition performs data processing using the allocated resources, comprising:
obtaining an amount of resources, stored in association with the time range to which the current time belongs, from the storage unit for storing schedule information describing what amount of resources is allocated to each partition in a time range of which period or what time; and
controlling such that each partition uses the obtained amount of resources to perform data processing.

11. A resource allocation program mounted on a computer in which the inside of the computer is divided into a plurality of partitions and each partition performs data processing using the allocated resources, the program causing a computer to execute:
obtaining an amount of resources, stored in association with the time range to which the current time belongs, from the storage unit for storing schedule information describing what amount of resources is allocated to each partition in a time range of which period or what time; and
controlling such that each partition uses the obtained amount of resources to perform data processing.
